# EUROPEAN PATENT SPECIFICATION

(11) **EP 3 880 953 B1**
(45) Date of publication and mention of the grant of the patent: **07.06.2023**
(21) Application number: 19805131.0
(22) Date of filing: 13.11.2019
(51) Int. Cl.: F03D 1/02, F03D 13/20, F03D 80/50

(54) **A MULTIROTOR WIND TURBINE**
WINDTURBINE MIT MEHREREN ROTOREN
ÉOLIENNE À ROTORS MULTIPLES

(30) Priority: 15.11.2018 DK PA201870749
(43) Date of publication of application: 22.09.2021
(73) Proprietor: VESTAS WIND SYSTEMS A/S, 8200 Aarhus N (DK)
(72) Inventor: SCHOMACKER, Jonas Lerche, 2680 Solrød Strand (DK); BAUN, Torben Ladegaard, 8541 Skødstrup (DK); HOLTEN-MØLLER, Per, 8600 Silkeborg (DK); BØTTCHER, Peter, 8250 Egå (DK); NEUBAUER, Jesper Lykkegaard, 8543 Hornslet (DK)
(74) Representative: Vestas Patents Department
(86) International application number: PCT/DK2019/050348
(87) International publication number: WO 2020/098895

(56) References cited:
- WO-A1-2017/178026
- WO-A1-2018/001429
- US-A1- 2013 127 173

## Description

### FIELD OF THE INVENTION

The present invention relates to a multirotor wind turbine comprising a tower extending in a vertical direction from a tower bottom to a tower top. The wind turbine further comprises a load carrying structure extending transverse to the vertical direction and arranged to carry at least two energy generating units, the load carrying structure being carried rotationally by the tower via a yaw arrangement.

### BACKGROUND OF THE INVENTION

Wind turbines normally comprise one or more energy generating units, each energy generating unit comprising a load carrying hub carrying one or more wind turbine blades. The wind acts on the wind turbine blades, thereby causing the load carrying hub to rotate. The rotational movements of the load carrying hub are transferred to a generator, either via a gear arrangement or directly, in the case that the wind turbine is of a so-called direct drive type. In the generator, electrical energy is generated, which may be supplied to a power grid.

Some wind turbines are provided with two or more energy generating units in order to increase the total power produced by the wind turbine, without having to provide the wind turbine with one very large, and therefore heavy, energy generating unit. Such wind turbines are sometimes referred to as 'multirotor wind turbines'.

Traditional horizontal axis wind turbines sometimes utilise the roof of the energy generating unit as platform for hoisting spare parts to and from the energy generating unit. Sometimes, the roof is used also as a landing platform for a helicopter.

Since the major part of the assembly and service work on a wind turbine is carried out on the drive train and components thereof, the roof of the energy generating unit is a natural choice for establishing access to the wind turbine for helicopters or drones or for hoisting spare parts to and from the wind turbine.

Not least on off-shore installations, such a platform may provide easy and safe access to the energy generating unit. However, accessing an energy generating unit in this manner is highly dependent on favourable weather conditions.

In multirotor wind turbines the energy generating units may be carried by a load carrying structure which is, in turn, connected to a tower via a yaw bearing structure. In such wind turbines, a centre of gravity of the energy generating units is displaced with respect to a longitudinal, vertical axis defined by the tower. Due to the displacement, the roof of the energy generating units may become unsuitable as a platform for hoisting or landing purpose.

Accordingly, access to and from the energy generating units for personnel, spare parts and other equipment may advantageously be through the tower.

A multirotor wind turbine is disclosed, for example, in WO 2018/001429 A1, US 2013/127173 A1, and WO 2017/178026 A1.

### DESCRIPTION OF THE INVENTION

It is an object of embodiments of the invention to provide a multirotor wind turbine with improved access for spare parts and personnel through the tower. It is a further object of embodiments of the invention to provide improved strength of a multirotor structure and to increase safety relative to access to and from the energy generating units.

The invention provides a multirotor wind turbine according to claim 1, the multirotor wind turbine comprising:
- a tower formed by a tower wall extending between a tower bottom and a tower top,
- a yaw arrangement carried by the tower and comprising an outer wall being rotationally suspended about the tower,
- at least two energy generating units, each carried by an arm extending from the outer wall, and
- a load management system for hoisting articles from the tower bottom to each energy generating unit via the yaw arrangement.

Thus, the invention provides a multirotor wind turbine, i.e. a wind turbine comprising two or more energy generating units.

The multirotor wind turbine comprises a tower, a yaw arrangement and at least two energy generating units. The tower is formed by a tower wall extending between a tower bottom and a tower top. Accordingly, the tower is a substantially vertical structure, similar to a tower of a traditional single rotor wind turbine. The tower wall defines a boundary between an interior part of the tower and the outside of the tower.

The yaw arrangement is carried by the tower and comprises an outer wall being rotationally suspended about the tower. The outer wall may be a solid wall.

In the present context the term 'yaw arrangement' should be interpreted to mean an arrangement which allows rotational movements of a structure relative to the tower of the wind turbine about a substantially vertical rotation axis. In the case of the multirotor wind turbine according to the invention, it is the outer wall which rotates relative to the tower.

Each of the energy generating units is carried by an arm extending from the outer wall. Accordingly, the arms, and thereby the energy generating units, are moved along with the outer wall when it performs yawing movements relative to the tower. Thus, the yawing movements direct the rotors of the energy generating units into the incoming wind.

In the present context the term 'energy generating unit' should be interpreted to mean a part of the wind turbine which actually transforms the energy of the wind into electrical energy. Each of the energy generating units thereby typically comprises a rotor, carrying a set of wind turbine blades, and a generator. The energy generating unit may further comprise a gear arrangement interconnecting the rotor and the generator. The generator, and possibly the gear arrangement, may be arranged inside a nacelle.

The arms may extend from the outer wall along substantially opposite directions, i.e. from opposing sides of the tower. The arms may extend along directions which are substantially perpendicular to the direction of the tower, or they may extend along directions forming an acute angle with the direction of the tower. The arms may be connected to the outer wall in such a manner that a line interconnecting the attachment positions of the two arms passes the tower. Alternatively, such an interconnecting line may intersect the tower.

The multirotor wind turbine further comprises a load management system for hoisting articles from the tower bottom to each energy generating unit via the yaw arrangement. Thus, articles, e.g. in the form of spare parts, tools, etc., can be transported from the tower bottom to a relevant energy generating unit inside the wind turbine, at least until it reaches the yaw arrangement. Thereby providing such articles to an energy generating unit is not dependent on weather conditions or the like, and the articles are provided in a safe manner. Furthermore, landing a helicopter directly on the energy generating unit is not required.

The articles being transported by means of the load management system thereby follow a transport path which goes through the yaw arrangement, i.e. through a part of the multirotor wind turbine where elements, such as walls, are potentially moving rotationally relative to each other.

Since the arms are connected to the outer wall, it is possible to gain access between an interior part of the tower and the energy generating units being carried by the arms, via the yaw arrangement and using the load management system, regardless of the yaw position of the yaw arrangement, i.e. independent of the angular position of the outer wall relative to the tower.

The path through the yaw arrangement may further form part of an escape path for personnel operating at or near the energy generating units being carried by the arms. Thereby personnel may escape via the tower, and thereby in a safe manner.

The multirotor wind turbine comprises a yaw space formed between the tower and the outer wall. The yaw space is accessible for the load management system for hoisting the articles from the tower bottom to each of the energy generating units such that the articles pass through the yaw space. The multirotor wind turbine according to the invention may further be a multirotor wind turbine, wherein:
- the arms form an internal arm space extending from the outer wall to the energy generating units,
- the tower forms an internal tower space from the tower bottom to the tower top, and
- the internal arm space and the internal tower space are connected by a passage extending across the yaw space through the tower wall and through the outer wall,
and wherein the load management system is configured to hoist articles from the tower bottom to each energy generating unit through the internal tower space, the passage and the internal arm space.

According to this embodiment, the articles are transported all the way from the tower bottom to the energy generating units without leaving the interior of the multirotor wind turbine.

A yaw space is formed between the tower and the rotationally suspended outer wall. The yaw space is closed in the sense that it spans the entire circumference of the tower angularly, and it is delimited by the tower wall and the outer wall, respectively. The walls of the yaw space are therefore movable relative to each other. However, it is preferably possible to access the yaw space, e.g. from an interior part of the tower via a passage in the tower wall.

Since the multirotor wind turbine, according to this embodiment, forms a passage connecting the internal spaces of the tower and the arms, the wind turbine allows access for personnel and equipment, such as spare parts and/or tools, to and from the energy generating units via the internal arm and tower structures. Particularly in relation to off-shore installations, this provides increased safety and efficiency and facilitates operation independent of rough weather conditions, etc.

The yaw arrangement may advantageously be serviced from the yaw space.

The load management system may form a first transport section extending in a vertical direction in the internal tower space between the tower bottom and an intersection platform, a second transport section extending in a transverse direction along the intersection platform through the yaw space, and a third transport section extending in the internal arm space.

According to this embodiment, the load management system is divided into at least three portions, i.e. the first transport section, the second transport section and the third transport section. Each of the transport sections defines a separate direction of movement, and each of the transport sections is associated with a specific part of the multirotor wind turbine. However, the transport sections communicate with each other in the sense that they in cooperation define the entire transport path from the tower bottom to the energy generating units, and in the sense that articles being transported by means of the load management system can be transferred between the transport sections to allow the articles to be transported along the entire transport path from the tower bottom to a relevant energy generating unit.

Furthermore, the transport sections are arranged in parts of the multirotor wind turbine which perform rotational movements relative to each other. Accordingly, dividing the load management system into sections in the manner described above allows a substantially continuous transport path to be obtained across parts which rotate relative to each other.

The first, the second and the third transport sections may be separate sections each forming an entrance point and an exit point such that the entry point of the first transport section can be accessed at the tower bottom, the exit point of the first transport section can be accessed at the entry of the second transport section, the exit point of the second transport section can be accessed at the entry of the third transport section and the exit of the third transport section can be accessed from one of the energy generating units.

According to this embodiment, the entry points and the exit points of the transport sections are positioned relative to each other in such a manner that an article being transported by means of the load management system can readily be transferred from one transport section to the next, thereby forming a substantially continuous transport path between the tower bottom and the energy generating unit. The transfer of the articles may be performed in an automatic manner, or it may be performed manually, e.g. by an operator manually decoupling an article from one transport section and coupling it to the next transport section.

Each transport section may comprise individual control. According to this embodiment, the operation of each transport section is controlled individually, i.e. independent of the operation of any of the other transport sections. For instance, each transport section may be turned on or off individually, and/or the speed of each transport section may be controlled individually, or the transport direction may be selected individually.

Thereby a given transport section may be turned on only while an article is actually being transported along that transport section. Furthermore, a transport speed may be selected which is in accordance with the article being transported, e.g. taking the weight of the article and/or delicacy of the article into account. Finally, this will allow one article to be transported along one transport section simultaneously with another article being transported along another transport section, possibly at a different speed. And one transport section may be stopped in order to connect or disconnect an article to/from that transport section without stopping the transport of another article along another transport section. Thereby an efficient load management system with high transport capacity is provided.

At least one of the first, the second and the third transport section may comprise a rail structure with a motorised trolley. According to this embodiment, the articles are moved along the rail structure and in a motorised manner. Thereby the manual handling required in order to move the articles is minimised. The rail structure may be arranged at an elevated position, e.g. on a ceiling or the like, in which case the articles may be transported along the rail structure in a suspended manner. As an alternative, the rail structure may be arranged on a wall or a floor.

The multirotor wind turbine may further comprise a sensor system configured to determine a position of articles being hoisted from the tower bottom to the energy generating units. Thereby the movement of a given article along the transport path can be monitored. This may be performed in a continuous manner, where the exact position of a given article at any given time is obtained. As an alternative, the sensor system may merely detect when a given articles passes a given check point along the transport path.

The sensor system may comprise at least one sensor arranged at the tower, at the yaw arrangement and/or at the arms carrying the energy generating units. For instance, sensors may be arranged in the internal tower space, in the yaw space and/or in the internal arm space. According to this embodiment, the presence of an article at the position of a given sensor can be detected as the article passes the sensor.

The sensor may be of a kind which is capable of reading a machine readable code, such as a barcode, a QR code, an RFID tag, etc. In this case the articles being transported may be provided with a suitable machine readable code, and the machine readable code may further comprise information related to the article being transported, such as the kind of article, the destination of the article, etc. Such a machine readable code may be read as the article passes the sensor, i.e. without stopping the article.

The multirotor wind turbine may further comprise a warning system configured to provide an alert in the energy generating units when articles are being hoisted towards the energy generating units, or to provide an alert at the tower bottom when articles are being lowered towards the tower bottom.

According to this embodiment, personnel being present at an energy generating unit or at the tower bottom is warned when an article is approaching. This improves the safety of the system.

In a second aspect, the invention provides a method for hoisting articles from a tower bottom to an energy generating unit of a multirotor wind turbine of the kind described above. According to this method, the articles are hoisted via the yaw arrangement, through the tower wall , through the outer wall, and through the yaw space formed between the tower wall and the outer wall.

### BRIEF DESCRIPTION OF THE DRAWINGS

The invention will now be described in further detail with reference to the accompanying drawings in which
Fig. 1 is a schematic view of a multirotor wind turbine according to an embodiment of the invention,
Figs. 2-5 illustrate a yaw arrangement for a multirotor wind turbine according to an embodiment of the invention,
Fig. 6 shows an outer wall part for the yaw arrangement of Figs. 2-5,
Figs. 7 and 8 are perspective views of two transport containers for use in a multirotor wind turbine according to an embodiment of the invention, and
Figs. 9-31 illustrate method steps of a method for transporting articles in a multirotor wind turbine according to an embodiment of the invention.

### DETAILED DESCRIPTION OF THE DRAWINGS

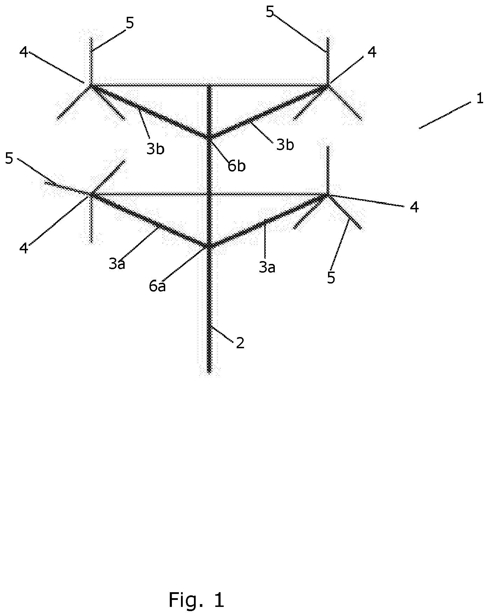

Fig. 1 is a schematic view of a multirotor wind turbine 1 according to an embodiment of the invention. The wind turbine 1 comprises a tower 2 and two load carrying structures, each comprising two arms 3 extending away from the tower 2 along substantially opposite directions. Each arm 3 carries an energy generating unit 4 with three wind turbine blades 5.

The load carrying structures 3 are connected to the tower 2 via two separate yaw arrangements 6, thereby allowing the lower set of arms 3a to perform yawing movements relative to the tower 2 independently of yawing movements of the upper set of arms 3b relative to the tower.

In traditional single rotor wind turbines, a nacelle carrying the single rotor of the wind turbine is normally connected directly to the top of the tower. Thereby the nacelle and the rotor can readily be accessed via the interior of the tower.

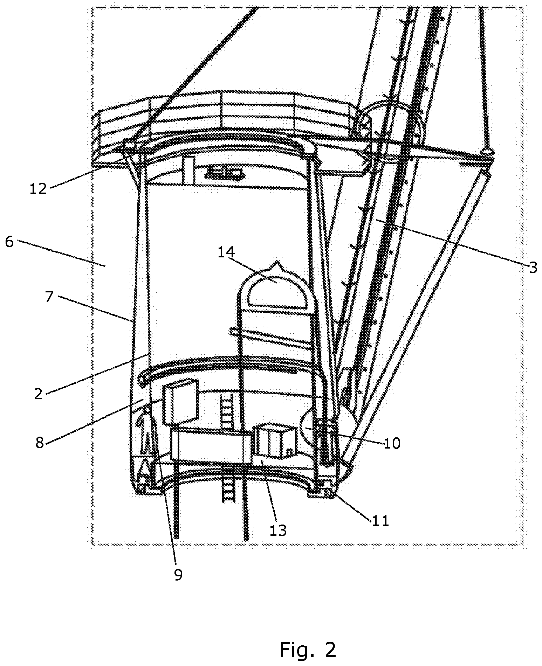

However, in the multirotor wind turbine 1 of Fig. 1 the energy generating units 4 are mounted on the arms 3 at a distance from the tower 2. Thereby the energy generating units 4 are not directly accessible from the interior of the tower 2. Instead, they may be accessed from the outside, e.g. via hoisting from a position immediately below a relevant energy generating unit 4, or from above via a helicopter. In the multirotor wind turbine 1 according to the invention, the energy generating units 4 can be accessed from the interior of the tower 2 by means of a passage extending through a relevant yaw arrangement 6 and an interior part of a relevant arm 3. This will be described in further detail below. Fig. 2 is a cross sectional view of a yaw arrangement 6 for a multirotor wind turbine according to an embodiment of the invention. The yaw arrangement 6 comprises an outer wall part 7 arranged circumferentially about an outer surface of the tower 2. Thereby a yaw space 8 is formed between the tower 2 and the outer wall part 7. The space 8 can be accessed from the interior part of the tower 2 via a passage 9.

Two arms 3, one of which is shown, are attached to the outer wall part 7 and extend in a direction away from the yaw arrangement 6 and the tower 2. The arms 3 are hollow, and the interior of each arm 3 can be accessed from the space 8 formed between the tower 2 and the outer wall part 7 via a passage 10. Thus, an energy generating unit mounted on an arm 3, essentially as illustrated in Fig. 1, can be accessed from the interior of the tower 2 via an access path extending through passage 9, space 8, passage 10 and the interior of the arm 3. This allows access between the interior of the tower 2 and the interior of the arm 3, regardless of the yaw position of the yaw arrangement 6.

The outer wall part 7 is connected to the tower 2 by means of a first bearing 11 and a second bearing 12. Thereby the outer wall part 7 can rotate relative to the tower 2 in order to orientate rotors of the energy generating units mounted on the arms 3 in accordance with the incoming wind. Accordingly, the access path described above extends across parts which are capable of performing rotational movements relative to each other.

The first bearing 11 interconnects a lower part of the outer wall part 7 and the tower 2, and the second bearing 12 interconnects an upper part of the outer wall part 7 and the tower 2. Thereby the extremities of the outer wall part 7 are each supported against the tower 2 by means of a bearing 11, 12, thereby stabilising the structure. The first bearing 11 is configured to handle axial loads as well as radial loads, whereas the second bearing 12 is configured to handle radial loads, but not axial loads. Thereby the axial loads are handled by the bearing 11 on which the outer wall part 7 rests, and the position where the highest axial loads are expected.

A platform 13 is arranged in the interior of the tower 2 at a vertical level corresponding to the position of the yaw arrangement 6. At the platform 13, equipment as well as personnel can be received and intermediately stored. For instance, equipment may be hoisted to the platform 13 from a lower interior part of the tower 2, using a hoisting arrangement 14. Once received at the platform 13, the equipment can be moved into the space 8 defined between the tower 2 and the outer wall 7, via opening 9. From there, the equipment can be moved into the interior of a relevant arm 3, via opening 10, and be moved inside the arm 3 to a relevant energy generating unit. Equipment may also be moved in the opposite direction from an energy generating unit to the lower interior part of the tower 2, via the platform 13.

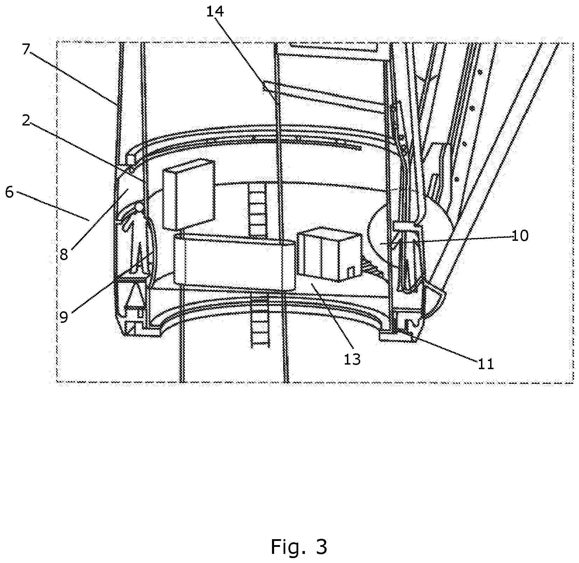

Fig. 3 is a detail of the yaw arrangement 6 of Fig. 2. In Fig. 3 the passage 9 between the interior part of the tower 2 and the space 8 defined between the tower 2 and the outer wall 7 can be seen more clearly than in Fig. 2.

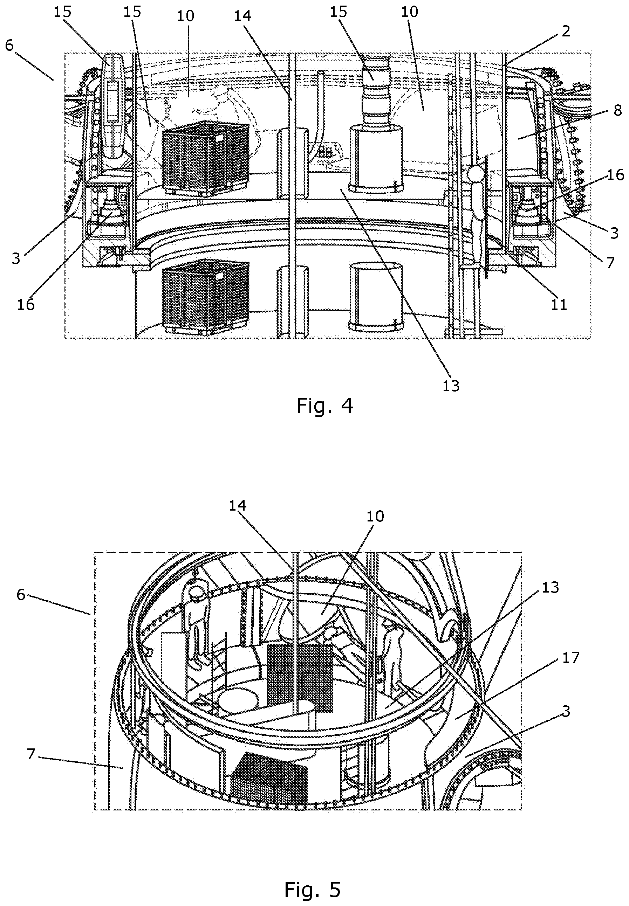

Fig. 4 is a cross sectional view of a part of a yaw arrangement 6 for a multirotor wind turbine according to an embodiment of the invention. Similarly to the embodiment shown in Figs. 2 and 3, the yaw arrangement 6 comprises an outer wall part 7 arranged circumferentially about the tower 2, thereby forming a space 8 there between.

In the embodiment of Fig. 4 the outer wall part 7 comprises a casted section onto which the arms 3 are attached, and one or more further sections arranged above the casted section and being attached to the casted section. In Fig. 4 only the casted section is shown. Thereby the part of the outer wall part 7 where the arms 3 are attached is stronger than the remaining part of the outer wall part 7. Accordingly, the manufacturing costs of the outer wall part 7 are minimised without compromising the strength of the outer wall part 7.

Fig. 4 further illustrates equipment being transported inside the wind turbine in transport containers 15. The transport containers 15 have a size and a shape which ensures that the transport containers 15 can be moved from a position at the lower interior part of the tower 2 to an energy generating unit mounted on one of the arms 3. Thereby it is ensured that equipment packed in one of the transport containers 15 will actually be able to reach a destination at an energy generating unit, without risking that the equipment gets stuck.

In Fig. 4 it can further be seen that the yaw arrangement 6 is provided with a plurality of yaw drives 16 configured for driving the yawing movements of the outer wall part 7 relative to the tower 2.

Fig. 5 is a perspective view of the yaw arrangement 6 of Fig. 4. Fig. 5 illustrates that the transport system used for transporting equipment between the lower interior part of the tower 2 and the energy generating unit may also be used for transporting personnel. This could, e.g., be relevant in the case that personnel needs to be evacuated from the wind turbine.

In Fig. 5 it can further be seen that the casted section of the outer wall part 7 is provided with a reinforcement flange 17. The reinforcement flange 17 does not extend the entire circumference of the casted section. Instead, it is positioned in the part of the casted section where the arms 3 are attached, i.e. in the part where the highest loads are expected, and where additional strength is therefore needed. Accordingly, improved strength is obtained with minimal material use.

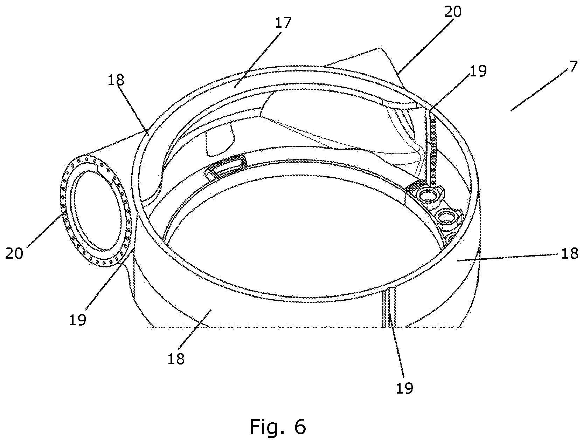

Fig. 6 is a perspective view of a casted section of the outer wall part 7 shown in Figs. 5 and 6. The casted section is formed by three segments 18, each spanning an angle of approximately 120°, the segments 18 being joined to each other by means of bolt connections 19. One of the segments 18 includes the reinforcement flange 17 and interface portions 20 for attaching the arms to the outer wall part 7.

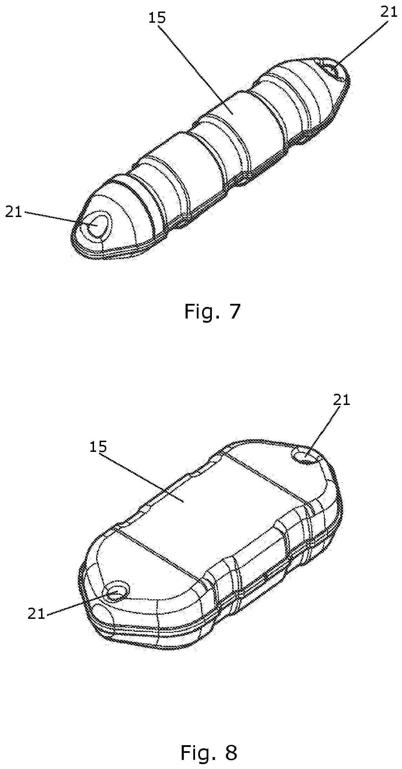

Figs. 7 and 8 are perspective views of two different transport containers 15 for a load management system for use in a multirotor wind turbine according to an embodiment of the invention. The transport container 15 of Fig. 7 has a size and shape which differs from the size and shape of the transport container 15 of Fig. 8. Thereby equipment which may be accommodated in the transport container 15 of Fig. 7 may not be accommodated in the transport container 15 of Fig. 8, and vice versa. However, both of the transport containers 15 have outer dimensions which ensure that they can pass from a lower interior part of a tower of a multirotor wind turbine to each of the energy generating units of the multirotor wind turbine, in the manner described above. Furthermore, the transport containers 15 provide a standardized manner of transporting equipment in a multirotor wind turbine.

The transport containers 15 are in the form of closed containers with a hard outer surface. Thereby the equipment being transported by means of the transport containers 15 is protected during transport.

The transport containers 15 are provided with eyelets 21 for connecting the transport containers 15 to a transport system, e.g. via hooks, pulleys, etc. Accordingly, the eyelets 21 provide a standardized interface between equipment being transported and the transport system.

The transport containers 15 may be made from a material which allows them to float, even if equipment is accommodated therein. This will allow the transport containers 15 to be dragged behind a seagoing vessel in a self-floating manner, thereby reducing the requirements with regard to storage space on the seagoing vessel.

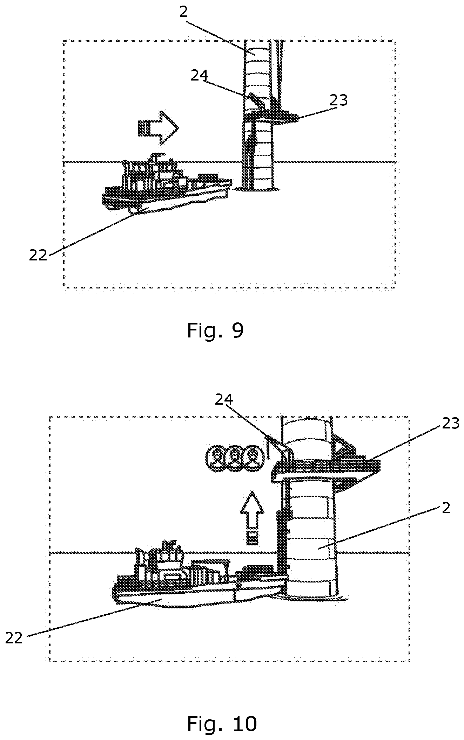

Figs. 9-31 illustrate method steps of a method for transporting articles in a multirotor wind turbine according to an embodiment of the invention.

In Fig. 9 a seagoing vessel 22 is arriving at a multirotor wind turbine positioned at an offshore site. The lowermost part of the tower 2 of the multirotor wind turbine can be seen, and a transition platform 23 carrying a crane 24 is arranged on the tower 2.

In Fig. 10 the seagoing vessel 22 is moored at the multirotor wind turbine, and personnel is in the process of being transferred from the seagoing vessel 22 to the transition platform 23.

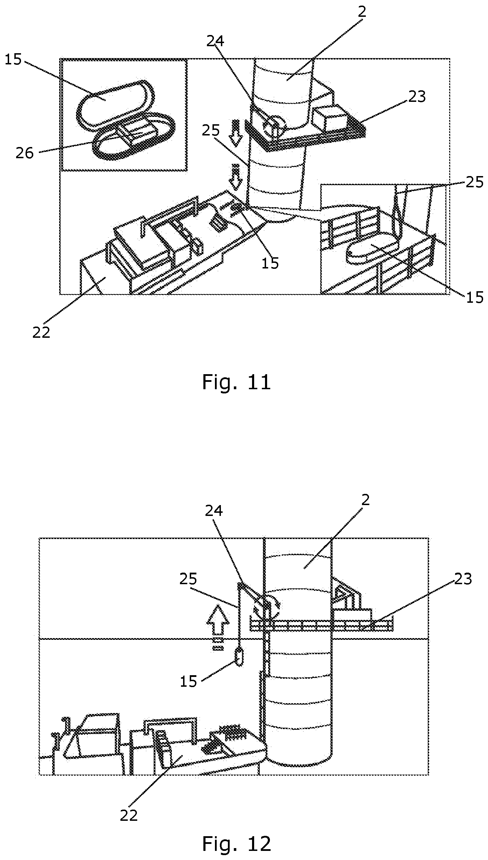

Fig. 11 illustrates a hoisting wire 25 being lowered from the transition platform 23 towards the seagoing vessel 22 by means of the crane 24, and the hoisting wire 25 being attached to a transport container 15 arranged on the seagoing vessel 22, the transport container 15 accommodating equipment 26 which has previously been packed into the transport container 15.

In Fig. 12 the transport container 15 is being hoisted from the seagoing vessel 22 towards the transition platform 23 by means of the crane 24.

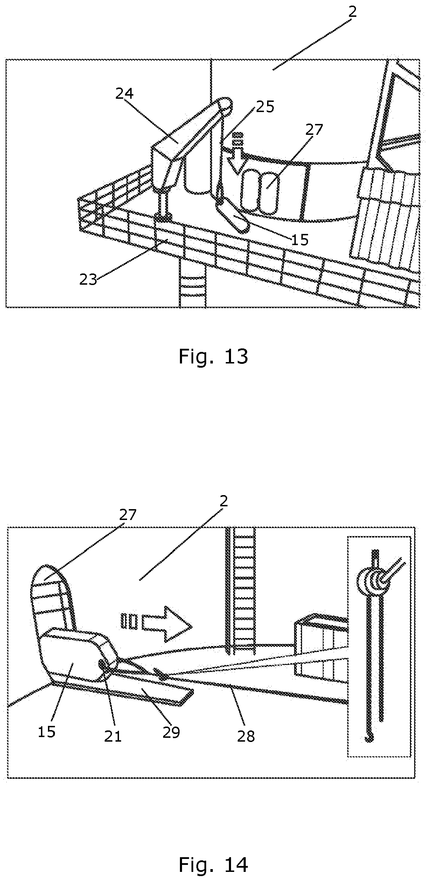

In Fig. 13 the transport container 15 has arrived at the transition platform 23, and the crane 24 is in the process of lowering the transport container 15 onto the transition platform 23, adjacent to an opening 27 formed in the wall of the tower 2.

In Fig. 14 the transport container 15 has been connected to a transport system arranged inside the multirotor wind turbine via a wire 28, and the transport container 15 is in the process of being pulled through the opening 27 formed in the wall of the tower 2 by means of the transport system pulling the wire 28. Accordingly, the transport container 15 is entering a lower interior part of the tower 2. It can be seen that the transport container 15 has been connected to the wire 28 via the eyelet 21.

A protective surface 29 is arranged on the floor, allowing the transport container 15 to slide along the floor without causing damage thereto.

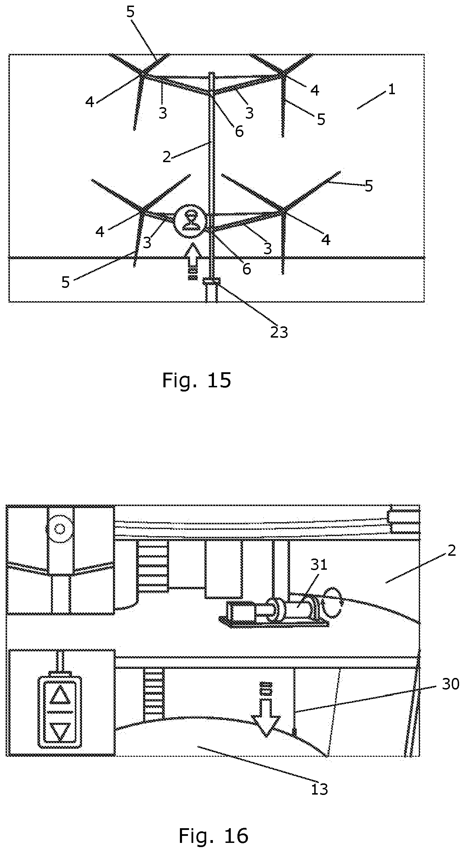

Fig. 15 illustrates that personnel is being hoisted from the lower interior part of the tower 2 to a platform arranged at a level corresponding to the position of a lowermost yaw arrangement 6.

In Fig. 16 a hoisting wire 30 is being lowered from the platform 13 towards the lower interior part of the tower 2 by means of a winch 31.

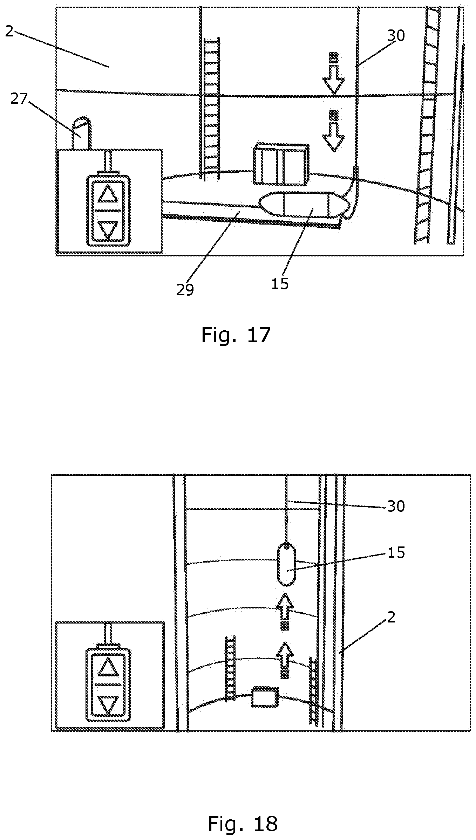

In Fig. 17 the hoisting wire 30 has reached the lower interior part of the tower 2 and is in the process of being attached to the transport container 15, which was previously moved into the lower interior part of the tower 2.

In Fig. 18 the transport container 15 is being hoisted from the lower interior part of the tower 2 towards the platform (not shown) by means of the hoisting wire 30 and the winch (not shown).

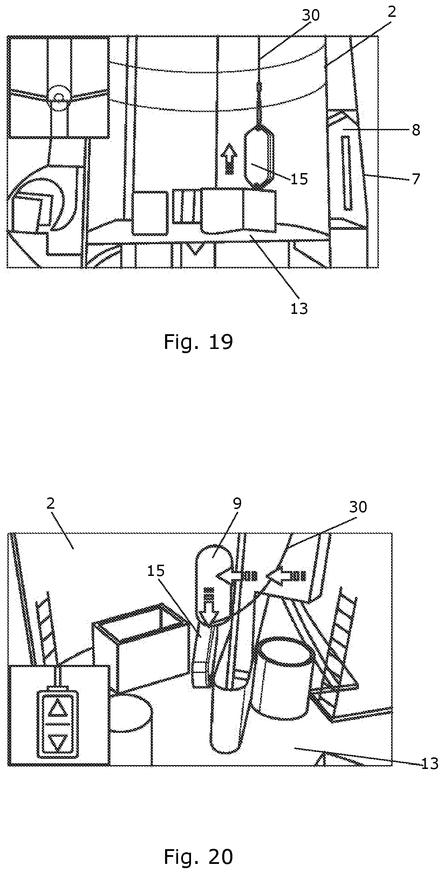

In Fig. 19 the transport container 15 has reached the platform 13 and is about to be lowered onto the platform 13.

In Fig. 20 the transport container 15 has been lowered onto the platform 13 and is about to be released from the hoisting wire 30.

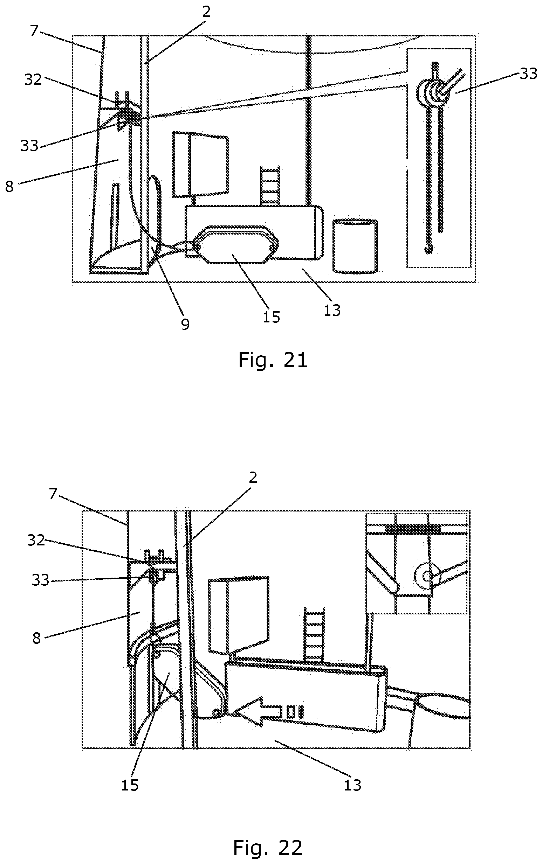

In Fig. 21 the transport container 15 has been connected to a rail system 32 arranged in the space 8 formed between the tower 2 and the outer wall part 7, by means of a chain hoist 33. The transport container 15 can thereby be pulled through the passage 9 and into the space 8 using the chain hoist 33.

In Fig. 22 the transport container 15 is in the process of being pulled through the passage 9 in the manner described above.

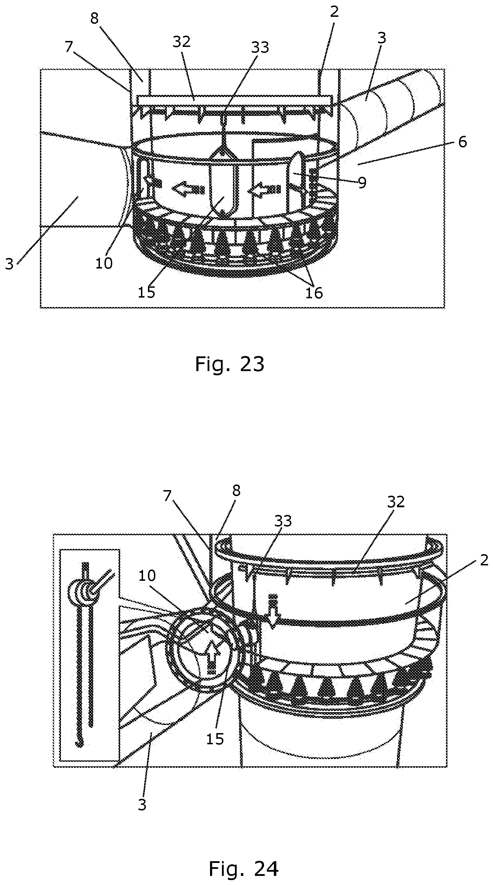

In Fig. 23 the transport container 15 has been pulled completely through the passage 9 and is now arranged in the space 8 and is suspended from the rail system 32. The transport container 15 is in the process of being transported inside the space 8 from the passage 9 towards a passage 10 interconnecting the space 8 and the interior of one of the arms 3.

In Fig. 24 the transport container 15 has reached the passage 10 and is in the process of being lowered from the rail system 32.

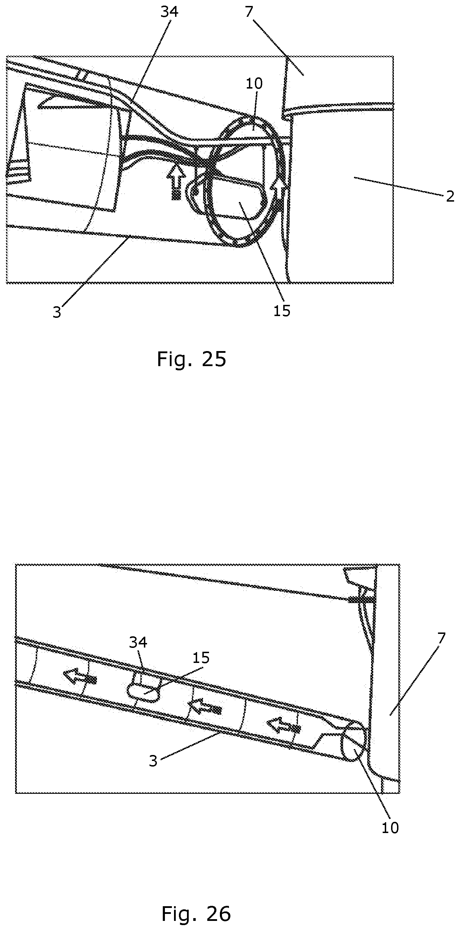

In Fig. 25 the transport container 15 has been connected to another rail system 34 arranged in the interior part of the arm 3.

In Fig. 26 the transport container 15 is in the process of being moved from the passage 10 towards an energy generating unit (not shown) being carried by the arm 3, by means of the rail system 34. Thus, the transport container 15 is being moved inside the arm 3.

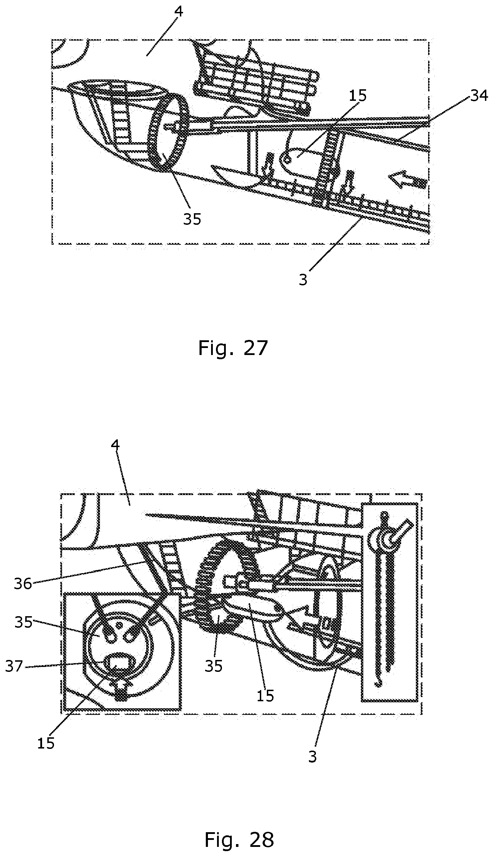

In Fig. 27 the transport container 15 has reached a position immediately before a fire door 35 which is arranged near an entrance to the energy generating unit 4 being carried by the arm 3. The transport container 15 is about to be lowered from the rail system 34.

In Fig. 28 the transport container 15 has been connected to a hoisting wire 36 forming part of a hoisting system arranged in the energy generating unit 4. The transport container 15 is in the process of being pulled through an opening 37 in the fire door 35 by means of the hoisting wire 36.

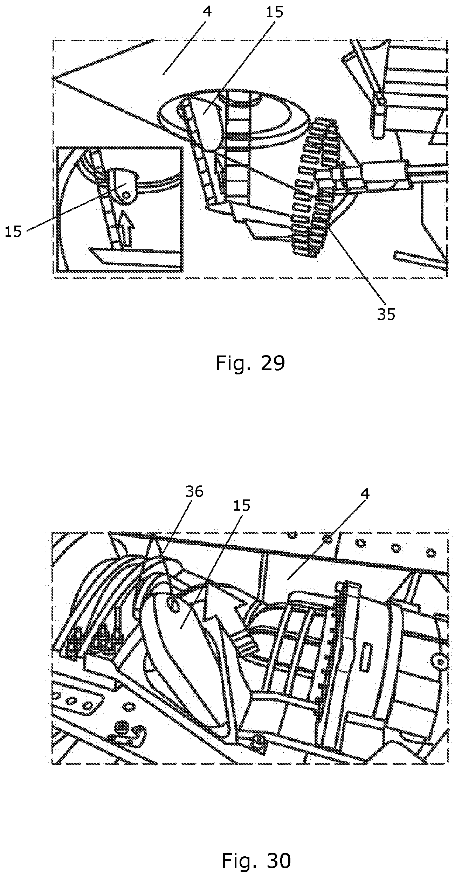

In Fig. 29 the transport container 15 is in the process of being pulled further into the energy generating unit 4.

Fig. 30 shows the transport container 15 entering the interior of the energy generating unit 4.

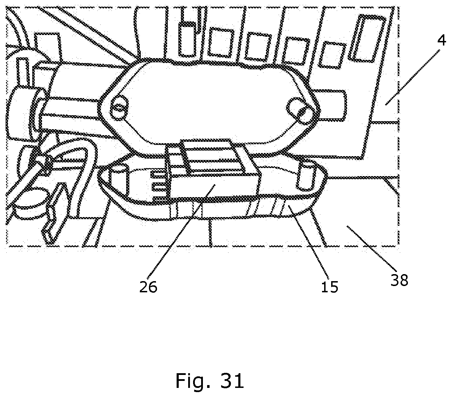

In Fig. 31 the transport container 15 is arranged on a floor 38 inside the energy generating unit 4 and has been released from the hoisting wire. The transport container 15 has been opened, thereby allowing access to equipment 26 which has been transported inside the transport container 15. Accordingly, the equipment 26 can now be used for performing a schedule service task at the energy generating unit 4.

## Claims

1. A multirotor wind turbine (1) comprising:
- a tower (2) formed by a tower wall extending between a tower bottom and a tower top,
- a yaw arrangement (6) carried by the tower (2) and comprising an outer wall (7) being rotationally suspended about the tower (2),
- at least two energy generating units (4), each carried by an arm (3) extending from the outer wall (7), and
- a load management system (14, 30, 31, 32, 33, 34, 36) for hoisting articles (15, 26) from the tower bottom to each energy generating unit (4) via the yaw arrangement (6),
wherein a yaw space (8) is formed between the tower wall and the outer wall (7), the yaw space being accessible for the load management system for hoisting the articles from the tower bottom to each energy generating unit (4) through the yaw space, and wherein the yaw space (8) is a closed space which can only be entered from the tower (2) or from the arms (3).

2. The multirotor wind turbine (1) according to claim 1, wherein:
- the arms (3) form an internal arm space extending from the outer wall (7) to the energy generating units (4),
- the tower (2) forms an internal tower space from the tower bottom to the tower top, and
- the internal arm space and the internal tower space are connected by a passage extending across the yaw space (8) through the tower wall and through the outer wall (7),
and wherein the load management system (14, 30, 31, 32, 33, 34, 36) is configured to hoist articles (15, 26) from the tower bottom to each energy generating unit (4) through the internal tower space, the passage and the internal arm space.

3. The multirotor wind turbine (1) according to claim 2, wherein the load management system forms a first transport section (14, 30, 31) extending in a vertical direction in the internal tower space between the tower bottom and an intersection platform (13), a second transport section (32) extending in a transverse direction along the intersection platform (13) through the yaw space (8), and a third transport section (34) extending in the internal arm space.

4. The multirotor wind turbine (1) according to claim 3, wherein the first (14, 30, 31), the second (32) and the third (34) transport sections are separate sections each forming an entrance point and an exit point such that the entry point of the first transport section (14, 30, 31) can be accessed at the tower bottom, the exit point of the first transport section (14, 30, 31) can be accessed at the entry of the second transport section (32), the exit point of the second transport section (32) can be accessed at the entry of the third transport section (34) and the exit of the third transport section (34) can be accessed from one of the energy generating units (4).

5. The multirotor wind turbine (1) according to claim 3 or 4, wherein each transport section (14, 30, 31, 32, 34) comprises individual control.

6. The multirotor wind turbine (1) according to claim 5, wherein the individual control allows operation of each transport section independent on the other transport sections relative to at least one of: the speed of the transport section, and a direction of movement of the transport section.

7. The multirotor wind turbine (1) according to any of claims 3-6, wherein at least one of the first, the second and the third transport section comprises a rail structure (32, 34) with a motorised trolley.

8. The multirotor wind turbine (1) according to any of the preceding claims, further comprising a sensor system configured to determine a position of articles (15, 26) being hoisted from the tower bottom to the energy generating units (4).

9. The multirotor wind turbine (1) according to claim 8, wherein the sensor system comprises at least one sensor arranged at the tower (2), at the yaw arrangement (6) and/or at the arms (3) carrying the energy generating units (4).

10. The multirotor wind turbine (1) according to any of the preceding claims, further comprising a warning system configured to provide an alert in the energy generating units (4) when articles (15, 26) are being hoisted towards the energy generating units (4), or to provide an alert at the tower bottom when articles (15, 26) are being lowered towards the tower bottom.

11. The multirotor wind turbine (1) according to any of the preceding claims, wherein the outer wall (7) forms a closed ring structure.

12. A method for hoisting articles (15, 26) from a tower bottom to an energy generating unit (4) of a multirotor wind turbine (1) according to any of the preceding claims, the wind turbine comprising:
- a tower (2) formed by a tower wall extending between a tower bottom and a tower top,
- a yaw arrangement (6) carried by the tower (2) and comprising an outer wall (7) being rotationally suspended about the tower (2),
- at least two energy generating units (4), each carried by an arm (3) extending from the outer wall (7), and
the method comprising hoisting the articles via the yaw arrangement (6), wherein the articles are transported through a yaw space formed between the tower wall and the outer wall.

## Patentansprüche

1. Multirotor-Windkraftanlage (1), die umfasst:
- einen Turm (2), der von einer Turmwand gebildet wird, die sich zwischen einem Turmboden und einer Turmoberseite erstreckt,
- eine Gieranordnung (6), die von dem Turm (2) getragen wird und eine Außenwand (7) umfasst, die drehend um den Turm (2) aufgehängt ist,
- mindestens zwei Energieerzeugungseinheiten (4), die jeweils von einem Arm (3), der sich von der Außenwand (7) erstreckt, getragen werden, und
- ein Lastverwaltungssystem (14, 30, 31, 32, 33, 34, 36) zum Heben von Artikeln (15, 26) von dem Turmboden zu jeder Energieerzeugungseinheit (4) über die Gieranordnung (6),
wobei ein Gierraum (8) zwischen der Turmwand und der Außenwand (7) gebildet ist, wobei der Gierraum für das Lastverwaltungssystem zum Heben der Artikel von dem Turmboden zu jeder Energieerzeugungseinheit (4) durch den Gierraum zugänglich ist, und wobei der Gierraum (8) ein geschlossener Raum ist, der nur von dem Turm (2) oder von den Armen (3) her betreten werden kann.

2. Multirotor-Windkraftanlage (1) nach Anspruch 1, wobei:
- die Arme (3) einen inneren Armraum bilden, der sich von der Außenwand (7) zu den Energieerzeugungseinheiten (4) erstreckt,
- der Turm (2) einen inneren Turmraum von dem Turmboden zu der Turmoberseite bildet, und
- der innere Armraum und der innere Turmraum von einer Passage verbunden sind, die sich über den Gierraum (8) durch die Turmwand und durch die Außenwand (7) erstreckt,
und wobei das Lastverwaltungssystem (14, 30, 31, 32, 33, 34, 36) dazu konfiguriert ist, Artikel (15, 26) von dem Turmboden zu jeder Energieerzeugungseinheit (4) durch den inneren Turmraum, die Passage und den inneren Armraum zu heben.

3. Multirotor-Windkraftanlage (1) nach Anspruch 2, wobei das Lastverwaltungssystem einen ersten Transportabschnitt (14, 30, 31) bildet, der sich in einer vertikalen Richtung in dem inneren Turmraum zwischen dem Turmboden und einer Kreuzungsplattform (13) erstreckt, wobei sich ein zweiter Transportabschnitt (32) in einer Querrichtung entlang der Kreuzungsplattform (13) durch den Gierraum (8) erstreckt, und sich ein dritter Transportabschnitt (34) durch den inneren Armraum erstreckt.

4. Multirotor-Windkraftanlage (1) nach Anspruch 3, wobei der erste (14, 30, 31), der zweite (32) und der dritte (34) Transportabschnitt separate Abschnitte sind, die jeweils eine Eingangsstelle und eine Ausgangsstelle derart bilden, dass die Eingangsstelle des ersten Transportabschnitts (14, 30, 31) an dem Turmboden zugänglich ist, die Ausgangsstelle des ersten Transportabschnitts (14, 30, 31) an dem Eingang des zweiten Transportabschnitts (32) zugänglich ist, die Ausgangsstelle des zweiten Transportabschnitts (32) an dem Eingang des dritten Transportabschnitts (34) zugänglich ist und der Ausgang des dritten Transportabschnitts (34) von einer der Energieerzeugungseinheiten (4) zugänglich ist.

5. Multirotor-Windkraftanlage (1) nach Anspruch 3 oder 4, wobei jeder Transportabschnitt (14, 30, 31, 32, 34) individuelle Steuerung umfasst.

6. Multirotor-Windkraftanlage (1) nach Anspruch 5, wobei die individuelle Steuerung den Betrieb jedes Transportabschnitts unabhängig von den anderen Transportabschnitten in Bezug auf mindestens eines der Folgenden erlaubt: die Geschwindigkeit des Transportabschnitts und eine Bewegungsrichtung des Transportabschnitts.

7. Multirotor-Windkraftanlage (1) nach einem der Ansprüche 3-6, wobei mindestens einer des ersten, des zweiten und des dritten Transportabschnitts eine Schienenstruktur (32, 34) mit einem motorisierten Transportwagen umfasst.

8. Multirotor-Windkraftanlage (1) nach einem der vorstehenden Ansprüche, die weiter ein Sensorsystem umfasst, das dazu konfiguriert ist, eine Position von Artikeln (15, 26) die von dem Turmboden zu den Energieerzeugungseinheiten (4) gehoben werden, zu bestimmen.

9. Multirotor-Windkraftanlage (1) nach Anspruch 8, wobei das Sensorsystem mindestens einen Sensor umfasst, der an dem Turm (2), an der Gieranordnung (6) und/oder an den Armen (3), die die Energieerzeugungseinheiten (4) tragen, eingerichtet ist.

10. Multirotor-Windkraftanlage (1) nach einem der vorstehenden Ansprüche, die weiter ein Warnsystem umfasst, das dazu konfiguriert ist, eine Warnung in den Energieerzeugungseinheiten (4) bereitzustellen, wenn Artikel (15, 26), die in Richtung der Energieerzeugungseinheiten (4) gehoben werden, oder eine Warnung an dem Turmboden bereitzustellen, wenn Artikel (15, 26) in Richtung des Turmbodens gesenkt werden.

11. Multirotor-Windkraftanlage (1) nach einem der vorstehenden Ansprüche, wobei die Außenwand (7) eine geschlossene Ringstruktur bildet.

12. Verfahren zum Heben von Artikeln (15, 26), von einem Turmboden zu einer Energieerzeugungseinheit (4) einer Multirotor-Windkraftanlage (1) nach einem der vorstehenden Ansprüche, wobei die Windkraftanlage umfasst:
- einen Turm (2), der von einer Turmwand gebildet wird, die sich zwischen einem Turmboden und einer Turmoberseite erstreckt,
- eine Gieranordnung (6), die von dem Turm (2) getragen wird und eine Außenwand (7) umfasst, die drehend um den Turm (2) aufgehängt ist,
- mindestens zwei Energieerzeugungseinheiten (4), die jeweils von einem Arm (3), der sich von der Außenwand (7) erstreckt, getragen werden, und
das Verfahren das Heben der Artikel über die Gieranordnung (6) umfasst, wobei die Artikel durch einen Gierraum transportiert werden, der zwischen der Turmwand und der Außenwand gebildet ist.

## Revendications

1. Eolienne à rotors multiples (1) comprenant :
- une tour (2) formée par une paroi de tour s'étendant entre une partie inférieure de tour et une partie supérieure de tour,
- un agencement de lacet (6) porté par la tour (2) et comprenant une paroi extérieure (7) qui est suspendue de manière rotative autour de la tour (2),
- au moins deux unités de production d'énergie (4), chacune portée par un bras (3) s'étendant à partir de la paroi extérieure (7), et
- un système de gestion de charge (14, 30, 31, 32, 33, 34, 36) permettant de hisser des articles (15, 26) à partir de la partie inférieure de tour jusqu'à chaque unité de production d'énergie (4) via l'agencement de lacet (6),
dans laquelle un espace de lacet (8) est formé entre la paroi de tour et la paroi extérieure (7), l'espace de lacet étant accessible pour le système de gestion de charge pour hisser les articles à partir de la partie inférieure de tour jusqu'à chaque unité de production d'énergie (4) à travers l'espace de lacet, et dans laquelle l'espace de lacet (8) est un espace fermé dans lequel il est possible d'entrer seulement à partir de la tour (2) ou à partir des bras (3).

2. Eolienne à rotors multiples (1) selon la revendication 1, dans laquelle :
- les bras (3) forment un espace de bras interne s'étendant à partir de la paroi extérieure (7) jusqu'aux unités de production d'énergie (4),
- la tour (2) forme un espace de tour interne à partir de la partie inférieure de tour jusqu'à la partie supérieure de tour, et
- l'espace de bras interne et l'espace de tour interne sont reliés par un passage s'étendant dans l'espace de lacet (8) à travers la paroi de tour et à travers la paroi extérieure (7),
et dans laquelle le système de gestion de charge (14, 30, 31, 32, 33, 34, 36) est configuré pour hisser des articles (15, 26) à partir de la partie inférieure de tour jusqu'à chaque unité de production d'énergie (4) à travers l'espace de tour interne, le passage et l'espace de bras interne.

3. Eolienne à rotors multiples (1) selon la revendication 2, dans laquelle le système de gestion de charge forme une première section de transport (14, 30, 31) s'étendant dans une direction verticale dans l'espace de tour interne entre la partie inférieure de tour et une plateforme d'intersection (13), une deuxième section de transport (32) s'étendant dans une direction transversale le long de la plateforme d'intersection (13) à travers l'espace de lacet (8), et une troisième section de transport (34) s'étendant dans l'espace de bras interne.

4. Eolienne à rotors multiples (1) selon la revendication 3, dans laquelle la première (14, 30, 31), la deuxième (32) et la troisième (34) section de transport sont des sections séparées formant chacune un point d'entrée et un point de sortie de telle sorte qu'il soit possible d'accéder au point d'entrée de la première section de transport (14, 30, 31) au niveau de la partie inférieure de tour, qu'il soit possible d'accéder au point de sortie de la première section de transport (14, 30, 31) au niveau de l'entrée de la deuxième section de transport (32), qu'il soit possible d'accéder au point de sortie de la deuxième section de transport (32) au niveau de l'entrée de la troisième section de transport (34) et qu'il soit possible d'accéder à la sortie de la troisième section de transport (34) à partir d'une des unités de production d'énergie (4).

5. Eolienne à rotors multiples (1) selon la revendication 3 ou 4, dans laquelle chaque section de transport (14, 30, 31, 32, 34) comprend une commande individuelle.

6. Eolienne à rotors multiples (1) selon la revendication 5, dans laquelle la commande individuelle permet un fonctionnement de chaque section de transport indépendamment des autres sections de transport par rapport à au moins une : de la vitesse de la section de transport, et d'une direction de mouvement de la section de transport.

7. Eolienne à rotors multiples (1) selon l'une quelconque des revendications 3-6, dans laquelle au moins une de la première, de la deuxième et de la troisième section de transport comprend une structure de rail (32, 34) avec un chariot motorisé.

8. Eolienne à rotors multiples (1) selon l'une quelconque des revendications précédentes, comprenant en outre un système de capteurs configuré pour déterminer une position d'articles (15, 26) qui sont hissés à partir de la partie inférieure de tour jusqu'aux unités de production d'énergie (4).

9. Eolienne à rotors multiples (1) selon la revendication 8, dans laquelle le système de capteurs comprend au moins un capteur agencé au niveau de la tour (2), au niveau de l'agencement de lacet (6) et/ou au niveau des bras (3) portant les unités de production d'énergie (4).

10. Eolienne à rotors multiples (1) selon l'une quelconque des revendications précédentes, comprenant en outre un système d'avertissement configuré pour fournir une alerte dans les unités de production d'énergie (4) lorsque des articles (15, 26) sont hissés vers les unités de production d'énergie (4), ou pour fournir une alerte au niveau de la partie inférieure de tour lorsque des articles (15, 26) sont abaissés vers la partie inférieure de tour.

11. Eolienne à rotors multiples (1) selon l'une quelconque des revendications précédentes, dans laquelle la paroi extérieure (7) forme une structure annulaire fermée.

12. Procédé de hissage d'articles (15, 26) à partir d'une partie inférieure de tour jusqu'à une unité de production d'énergie (4) d'une éolienne à rotors multiples (1) selon l'une quelconque des revendications précédentes, l'éolienne comprenant :
- une tour (2) formée par une paroi de tour s'étendant entre une partie inférieure de tour et une partie supérieure de tour,
- un agencement de lacet (6) porté par la tour (2) et comprenant une paroi extérieure (7) qui est suspendue de manière rotative autour de la tour (2),
- au moins deux unités de production d'énergie (4), chacune portée par un bras (3) s'étendant à partir de la paroi extérieure (7), et
le procédé comprenant un hissage des articles via l'agencement de lacet (6), dans lequel les articles sont transportés à travers un espace de lacet formé entre la paroi de tour et la paroi extérieure.
